Europäisches Patentamt

(19) European Patent Office

Office européen des brevets

(11) Publication number: **0 258 011**
**A2**

(12)

# EUROPEAN PATENT APPLICATION

(21) Application number: 87307414.0

(22) Date of filing: 21.08.87

(51) Int. Cl.⁴: **B 60 T 17/08**

(30) Priority: 23.08.86 GB 8620569

(43) Date of publication of application:
02.03.88 Bulletin 88/09

(84) Designated Contracting States:
BE DE ES FR IT NL SE

(71) Applicant: BENDIX LIMITED
Douglas Road
Kingswood, Bristol BS15 2NL (GB)

(72) Inventor: Beesley, Guy Antony
48 Buckingham Road Petersfield Park
Chippenham Wilts. SN15 3TL (GB)

(74) Representative: Turner, Alan Reginald
BENDIX LIMITED Douglas Road
Kingswood, Bristol BS15 2NL (GB)

(54) Improvements to fluid pressure operating actuators.

㊼ A spring applied fluid pressure operable parking disc brake actuator has a cylindrical housing (1, 7) with a fluid pressure operable diaphragm (4) which acts against a cup-shaped actuator plate (11) in a sense to relieve the output force exerted therethrough by springs (12) and the periphery (24) of the plate (11) being restrined by an arcuate internal stop member (25) which is located in three places within the housing by means of projections which engage in recesses 18 in the wall of the housing.

EP 0 258 011 A2

## Description

Improvements to Fluid Pressure Operable Actuators

This invention relates to fluid pressure operable actuators and relates especially but not exclusively to brake actuators.

In the Specification of Published European Patent Specification No. 009689 there is described a fluid pressure operable disc brake actuator including a housing, a pressure responsive diaphragm dividing the housing into a pressure chamber and a non-pressure chamber, an actuator output rod connected to a pressure plate co-operating with the diaphragm and passing through an aperture in the housing, a force exerting compression spring retained in the non-pressure chamber between the pressure plate and the housing the pressure plate being dished and having a peripheral part engageable with separate stop members projecting inwardly of the housing to inhibit full expansion of the spring.

There is a possible shortcoming with such an actuator in that usually at least three stop members are required fitment of theses can be tedious and in some forms the stop members can be removed from externally of the actuator.

The present invention provides a fluid pressure operable diaphragm spring force actuator including a housing, a pressure repsonsive diaphragm dividing the housing into a pressure chamber and a non-pressure chamber, an actuator output rod connected to actuator plate co-operating with the diaphragm said rod passing through an aperture in the housing and a force-exerting compression spring being retained in the non-pressure chamber between the pressure plate and the housing characterised by the actuator plate having a peripheral part engageable with at least one arcuate stop member axially located within the inner wall of the housing by a plurality of outward projections engaging in respective apertures or recesses.

In order that the invention may be more clearly understood and readily carried into effect, the same will be further described by way of example with reference to the accompanying drawing of which:

Fig. 1 shows a part sectional view of a spring brake actuator,

Fig. 2 shows one embodiment of a stop member for use in the actuator

Fig. 3 shows an alternative embodiment of a stop member and,

Fig. 4 shows a fragmental section of an alternative embodiment.

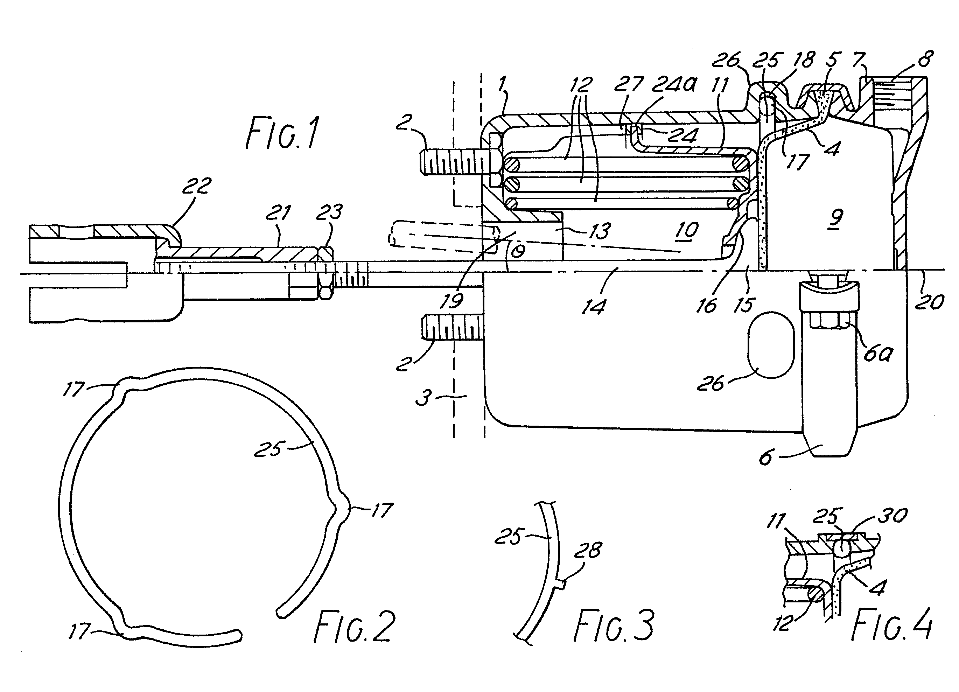

Referring to the part-sectional view of Fig. 1, the actuator comprises a cast metal cylindrical housing 1 with one closed end provided with three mounting studs or bolts with shaped heads which are captive in the housing to prevent rotation. Two of such bolts are identified by references 2 and serve for mounting the actuator to a mounting bracket of chassis member 3 (shown dotted) of a vehicle for the purpose of actuating the vehicle brakes typically via disc brake mechanism. The housing is provided with a pressure responsive member in the form of a diaphragm 4 with a peripherial bead 5 clamped between the peripheries of the open ends of housing 1 and a pressure plate or cover 7 by a clamping ring 6 and bolt 6a. The pressure plate 7 is provided with a fluid pressure input port 8. The diaphragm therefore divides the housing into a controllable pressure chamber 9 and a non-pressure chamber 10.

The diaphragm 4 is shown in the drawing in the position it takes up when full hold-off fluid pressure is applied at the port 8. In this position, the diaphragm acts against a dished actuator plate 11 which rests against inward ends of a plurality of internal ribs cast into the housing 1. Between actuator plate 11 and the facing closed end of the housing there is located a group of three concentric springs 12 under compressions. Although otherwise closed this facing end of the hosuing is provided with a central aperture 13 via which an output member in the form of an actuator rod 14 projects outwardly of the actuator 1. The rod 14 passes through actuator plate 11 the inner end of 14 being provided with a head 15 which locates in a recess 16 of the member 11 so that the actuator plate can exert a tensional force in the rod 14. It is seen therefore that release of air pressure from the chamber 9 via port 8 is able to place the actuator rod 14 in tension. Furthermore, by virtue of the mutual shapes of head 15 and recess 16, the actuator rod 14 is pivotally moveable through a range of angles as indicated by the angle 8.

Although now shown, in order to accommodate the above mentioned range of angular movement for the rod 14 but at the same time provide for the exclusion of contaminants into the actuator itself, a suitable flexible dirt exclusion member is preferably to be provided.

In the arrangement shown the outer end of the actuator rod 14 is connected to a brake mechanism by a suitable screw thimble 21 and a rotatable yoke 22 and thimble 21 preferably being provided with a locking nut 23. Alternatively, in order to provide a compact arrangement and to afford a convenient wind-off facility the thimble 21 and yoke 22 may be replaced by a yoke as described in the Speciification of copending European Application No. 87407007.3 or U.K. Patent Application No. 8619491. Considering in greater detail the member 11, this member is provided with a peripheral rim or flange 24, with a protective moulded plastic bead 24a. In the fully retracted position thereof, that is when there is no pressure applied to the input port 8, this flange is engageable with an arcuate stop member 25, and the profile is such as to tend to prevent inward radial movement of the stop member due to the axial force exerted thereon by the springs 12.

The stop member reduces a possibility of damage to the diaphragm by engagement with the inside of cover 7 and it also prevents the possibility of dangerous release of the potential energy of the spring by inadvertent removal of the pressure plate 7. Preferably, the arcuate stop member 25 is formed of springy wire as shown in Fig. 2 with three euqally circumferential spaced outwardly projecting parts 17 located in recesses 18 in a circumferential bulge or bulges such as 26 cast into the cylindrical housing wall.

It will be appreciated that the arcuate stop member can only be inserted or removed when the housing 1, pressure plate 11 and springs 12 are safely jigged and the springs 12 are sufficiently compressed to permit access to 25 with the pressure cover 7 and diaphragm 4 removed.

In al alternative embodiment of the stop means, as shown in Fig. 3, the projecting parts 17 of the stop member 25 may be provided by substantially equally spaced welded or brazed lugs such as 28 to locate in radial or other suitable drillings in lieu of the recesses 18.

In an alternative of the bulges 26 cast into the cylindrical housing wall may be omitted. In that case the thickness of the wall may be such that the recesses penetrate the wall and visual verification that the stop means is in position can then be made before removal of the clamping ring 6 to replace the diaphragm 4.

The apertures may be conveniently closed by plugs, an encircling thermally skrunk-on plastic band or an adhesive tape 30 as illustrated in the fragmentary view of Fig. 4.

The use of a plurality of springs 12 in the embodiment described enables a high outpout force to be provided whilst employing relatively non-critical specifications of relatively lower rated springs than if a single spring was used. The facility to be able to provide a multiplicity of actuator outputs by employing different combinations of springs in a single actuator design is also advantageous.

When the actuator is used as a parking disc brake actuator for a vehicle braking system the actuator force may, of course, be released by adjustment of the thimble 21 which is rotatable in yoke 22 or by the use of the alternative form of yoke referred to in the foregoing.

## Claims

1. A fluid pressure operable diaphragm spring force actuator including a housing (1,7) a fluid pressure responsive diaphragm (4) dividing the housing into a pressure chamber (9) and a non-pressure chamber (10) an actuator rod (14) connected to an actuator plate (11) co-operable with the diaphragm said rod passing through an aperture in the housing and a force exerting spring (12) being retained under compression in the non-pressure chamber (10) between the actuator plate and the housing characterised by the actuator plate (11) having a peripheral part (24, 24a) engageable with at least one arcuate stop member (25) axially located within the inner wall of the housing (1) by a plurality of outward projections (17; 28) engaging in respective apertures or recesses (18).

2. A fluid pressure operable diaphragm spring force actuator as claimed in claim (1) characterised in that said arcuate stop member (25) is a substantially circular springy wire member formed to provide a plurality of conjoined radially outward projections (17).

3. A fluid pressure operable diaphragm spring force actuator as claimed in claim 1 characterised in that said arcuate stop member (25) is a substantially circular springy member :said projections comprising plurality of radially outward extending lugs (28).

4. A fluid pressure operable diaphragm spring force actuator as claimed in claim 2 or 3 characterised in that it has at least three said projections.

5. A fluid pressure operable diaphragm spring force actuator as claimed in claim 2, 3 or 4 characterised in that said projections (17) are substantially equally circumferentially spaced one from the next.

6. A fluid pressure operable diaphragm spring force actuator as claimed in any preceeding claim and characterised in that said recesses (18) are formed in a bulge or bulges of the housing.

7. A fluid pressure operable diaphragm spring force actuator as claimed in any of claims 1 to 5 characterised in that said recesses (18) extend as aperture through the wall of the housing (1).

8. A fluid pressure operable diaphragm spring force actuator as claimed in claim 7 characterised by an encircling band (30) covering the outward ends of the apertures.

9. A fluid pressure operable diaphragm spring force actuator as claimed in claim 8 characterised in that said encircling band (30) is a thermally shrunk-on band.

FIG.1

FIG.2

FIG.3

FIG.4